# EUROPEAN PATENT SPECIFICATION

(11) **EP 2 716 952 B1**
(45) Date of publication and mention of the grant of the patent: **12.09.2018**
(21) Application number: 11827773.0
(22) Date of filing: 28.11.2011
(51) Int. Cl.: F16L 21/02, B29C 45/44, F16L 21/08

(54) **JOINT AND PRODUCTION METHOD THEREFOR**
VERBINDUNG UND HERSTELLUNGSVERFAHREN DAFÜR
RACCORD, ET PROCÉDÉ DE FABRICATION DE CELUI-CI

(30) Priority: 31.05.2011 JP 2011121606; 30.08.2011 WO PCT/JP2011/069591
(43) Date of publication of application: 09.04.2014
(73) Proprietor: ONDA MFG Co., Ltd., Yamagata-shi Gifu 501-2257 (JP)
(72) Inventor: HAYASHI, Nobuhiko, Yamagata-shi Gifu 501-2257 (JP); NAKAMURA, Koichi, Yamagata-shi Gifu 501-2257 (JP); OKITA, Masahiro, Yamagata-shi Gifu 501-2257 (JP)
(74) Representative: Appleyard Lees IP LLP
(86) International application number: PCT/JP2011/077426
(87) International publication number: WO 2012/164773

(56) References cited:
- DE-B3-102004 004 364
- DE-C- 3 843 995
- JP-A- 2005 048 916
- JP-A- 2006 207 675
- JP-A- 2007 155 106
- JP-A- 2008 095 899
- JP-A- 2008 095 899
- US-A- 4 991 882

## Description

### TECHNICAL FIELD

The present invention relates to a joint used in a piping system such as a feed-water system or a hot water supply system and a method for manufacturing the joint. More specifically, the invention relates to a joint and a method for manufacturing a joint, in which an outer tubular portion and an inner tubular portion for forming a pipe insertion space are formed integrally with a joint body, and a fitting groove formed in the outer peripheral surface of the inner tubular portion and a sealing member fitted in the fitting groove that can be visually checked over its entirety.

### BACKGROUND ART

Conventionally, a joint used in a piping system such as a feed-water system or a hot water supply system has a sealing member (which is, for example, a packing, an O-ring, or a seal ring), which is mounted between a pipe inserted into a joint body and the joint body to maintain water-tightness. Methods for maintaining the water-tightness include an outer periphery sealing method, in which the outer peripheral side of the pipe is sealed, and an inner periphery sealing method, in which the inner peripheral side of the pipe is sealed. Specifically, since the pipe is typically stored in an exposed state, there is foreign matter or damage on the outer peripheral surface of the pipe. Accordingly, the outer periphery sealing method may cause water leak when the pipe is joined to the joint. In contrast, if the inner periphery sealing method is selected, sealing is performed at the inner peripheral surface of the pipe so that such leakage does not occur. Specifically, in a joint employed in the inner periphery sealing method, a pipe insertion space is formed between an outer tubular portion and an inner tubular portion and a sealing member is fitted in a fitting groove, which is formed in the outer peripheral surface of the inner tubular portion.

Patent Document 1 discloses a pipe joint for the inner periphery sealing method. The pipe joint is configured by a joint body forming a passage as a whole and an outer shell that covers the joint body. Specifically, the joint body is formed through injection molding and inserted into a mold. Plastic for forming the outer shell is then supplied into the mold to form the outer shell onto the joint body. In other words, the joint body and the outer shell of the pipe joint are formed as separate bodies. After the joint body is molded, the outer shell is formed on the outer periphery of the joint body through insert molding. This complicates the configuration of the pipe joint, thus complicating the manufacture of the pipe joint. To solve this problem, it has been demanded to provide an easily manufactured joint that has a simple configuration having an inner tubular portion and an outer tubular portion that are formed integrally with a joint body.

As one such joint, a pipe joint described in Patent Document 2 is known. Specifically, in the pipe joint, a joint base having an inner tubular portion, which is inserted into the inner periphery of a pipe, is formed integrally with an outer tubular portion that covers the inner tubular portion. The inner tubular portion includes a water stopper O-ring and an oxygen impermeable O-ring both serving as a sealing member, which are arranged in parallel. The joint base includes a cap for preventing a pipe retainer from separating from the joint base.

Patent Document 3 discloses a pipe joint having a checking hole for checking the state of a pipe at the time when the pipe is being inserted into a joint and after the pipe is received in the joint. The pipe joint has a double tubular body structure including an inner tubular body and an outer tubular body. A pipe insertion clearance for receiving a joint pipe is formed between the inner tubular body and the outer tubular body. A seal ring is fitted in a seal ring groove at the outer periphery of the inner tubular body. The checking hole is formed in the outer tubular body at such a position that the seal ring is visible from the exterior. The checking hole is shaped as an elongated hole extending in the axial direction of the pipe joint.

### PRIOR ART DOCUMENT

### Patent Document

Patent Document 1: Japanese Laid-Open Patent Publication No. 2005-233363
Patent Document 2: Japanese Laid-Open Patent Publication No. 2008-95899
Patent Document 3: Japanese Laid-Open Patent Publication No. 2005-48916
JP 2008 095899 discloses a pipe coupling that has an oxygen impermeable function.

DE 38 43 995 discloses a first hole connection.

DE 10 2004 004 364 discloses a jack coupling to connect fluid pipes.

US 4 991 882 discloses a connector including a made member and a female member adapted to make therewith.

### SUMMARY OF THE INVENTION

### Problems that the Invention is to Solve

In a joint having an inner tubular portion and an outer tubular portion that are formed integrally with a joint body, the outer tubular portion is located around the inner tubular portion. This makes it impossible to visually check the mounting of a sealing member from the exterior of the outer tubular portion after the sealing member is fitted in the inner tubular portion. In the conventional joint described in Patent Document 2, once the water stopper O-ring and the oxygen impermeable O-ring, both serving as the sealing member, are installed in the inner tubular portion, the outer tubular portion hampers viewing of the O-rings from the exterior. As a result, a failure to mount the sealing member in the inner tubular portion, if any, may be undetected. In this case, when water is sent into the pipe joined to the joint, the water leaks through the joint.

In the pipe joint described in Patent Document 3, the seal ring (the sealing member) is visible along the entire width through the checking hole in the axial direction of the outer tubular portion. However, since the length of the checking hole is smaller than the length of the seal ring in a radial direction of the outer tubular portion, the seal ring cannot be viewed along the entire circumference of the seal ring. As a result, it is impossible to visually check the seal ring along the entire circumference to determine whether there is damage on any portion of the seal ring or whether foreign matter such as dirt or dust is adhered to the seal ring. Further, before the seal ring is installed, the seal ring groove (a fitting groove) cannot be seen along the entire circumference. This makes it impossible to inspect the seal ring groove for a molding burr along the entire circumference.

Accordingly, it is an objective of the present invention to provide a joint that ensures visibility of a sealing member from the exterior after the sealing member is mounted in an inner tubular portion, thus preventing a failure to mount the sealing member and allowing damage inspection of the sealing member along the entire circumference, and enables burr inspection in a fitting groove along the entire circumference at the time when the sealing member is not mounted in the fitting groove.

### Means for Solving the Problems

To achieve the foregoing objective and in accordance with a first aspect of the present invention, a joint is disclosed that includes a joint body and an inner tubular portion and an outer tubular portion formed integrally with the joint body. The inner tubular portion and the outer tubular portion form an insertion space for receiving a pipe. The inner tubular portion has an outer peripheral surface. A fitting groove is formed in the outer peripheral surface of the inner tubular portion. A sealing member is fitted in the fitting groove to maintain water-tightness in the gap between the pipe received in the insertion space and the inner tubular portion. A pair of view windows are formed in the outer tubular portion and arranged at opposite positions to visually check the fitting groove and fitting of the sealing member in the fitting groove from the exterior. The view windows are formed such that, when the sealing member is not fitted, the entire circumference and the entire width of the fitting groove can be seen.

The length of a portion of each view window facing the fitting groove in a radial direction of the outer tubular portion is preferably greater than or equal to the length of the fitting groove in a radial direction of the inner tubular portion, and the width of the portion of each view window facing the fitting groove in the axial direction of the outer tubular portion is preferably greater than or equal to the width of the fitting groove in the axial direction of the inner tubular portion.

Each view window is preferably a rectangular through hole as viewed from the front.

The outer tubular portion preferably has an outer end, and each view window is preferably a cutout extending axially inward from the outer end of the outer tubular portion.

The outer tubular portion preferably has an outer end, and the fitting groove is preferably arranged inward with respect to the outer end of the outer tubular portion.

In accordance with a second aspect of the present invention, a method for manufacturing the joint according the first aspect is provided. The mold includes a pair of split mold members for forming an outer peripheral surface of the joint body, an insert passed through the split mold members to form the fitting groove in the inner tubular portion, and a slide core for forming the insertion space and a passage inside the inner tubular portion. The insert is configured by a pair of insert members. Projecting portions for forming the view windows are formed in opposing surfaces of the insert members. Each of the projecting portions has a semi-cylindrical distal end. A protrusion for forming the fitting groove is formed in an inner peripheral surface of the distal end of each projecting portion to form the fitting groove in the outer peripheral surface of the inner tubular portion. The method includes: clamping the mold; and injecting molten plastic into a cavity formed in the mold to perform molding.

In accordance with a third aspect of the present invention, a method for manufacturing a joint using a mold is provided. The joint has an inner tubular portion and an outer tubular portion that are formed integrally with a joint body and form an insertion space for receiving a pipe, a fitting groove for fitting a sealing member formed in an outer peripheral surface of the inner tubular portion, and a view window formed in the outer tubular portion to visually check the sealing member to be fitted in the fitting groove. The method includes: clamping a pair of split mold members for forming an outer peripheral surface of the joint body to each other; clamping, to the split mold members, an insert for forming the fitting groove in the inner tubular portion and the view window in the outer tubular portion at a position corresponding to the fitting groove; clamping, to the split mold members, a slide core for forming the insertion space and a passage inside the inner tubular portion; and injecting molten plastic into a cavity formed in the mold to mold the joint body.

The insert preferably includes a pair of insert members, and each of the insert members preferably have a projecting portion for forming the view window and a semi-cylindrical end. An arcuate protrusion for forming the fitting groove is preferably formed at the end, and the protrusions of the two insert members preferably form the fitting groove in an outer peripheral surface of the inner tubular portion, and the projecting portions of the insert members preferably form the view window.

### EFFECTS OF THE INVENTION

The present invention produces the effects described below.

According to a joint of the present invention, the inner tubular portion and the outer tubular portion, which form the insertion space for receiving the pipe, are formed integrally with the joint body. The fitting groove is formed in the outer peripheral surface of the inner tubular portion. The windows are formed in the outer tubular portion and arranged at opposite positions to visually check the fitting groove and fitting of the sealing member in the fitting groove from the exterior. The view windows are formed such that, when the sealing member is not fitted, the entire circumference and the entire width of the fitting groove can be seen.

The length of a portion of each view window facing the fitting groove in a radial direction of the outer tubular portion is preferably greater than or equal to the length of the fitting groove in a radial direction of the inner tubular portion, and the width of the portion of each view window facing the fitting groove in the axial direction of the outer tubular portion is preferably greater than or equal to the width of the fitting groove in the axial direction of the inner tubular portion.

Each view window is preferably a rectangular through hole as viewed from the front.

The outer tubular portion preferably has an outer end, and each view window is preferably a cutout extending axially inward from the outer end of the outer tubular portion.

The outer tubular portion preferably has an outer end, and the fitting groove is preferably arranged inward with respect to the outer end of the outer tubular portion.

In accordance with a second aspect of the present invention, a method for manufacturing the joint according the first aspect is provided. The mold includes a pair of split mold members for forming an outer peripheral surface of the joint body, an insert passed through the split mold members to form the fitting groove in the inner tubular portion, and a slide core for forming the insertion space and a passage inside the inner tubular portion. The insert is configured by a pair of insert members. Projecting portions for forming the view windows are formed in opposing surfaces of the insert members. Each of the projecting portions has a semi-cylindrical distal end. A protrusion for forming the fitting groove is formed in an inner peripheral surface of the distal end of each projecting portion to form the fitting groove in the outer peripheral surface of the inner tubular portion. The method includes: clamping the mold; and injecting molten plastic into a cavity formed in the mold to perform molding.

### EFFECTS OF THE INVENTION

The present invention produces the effects described below.

According to a joint of the present invention, the inner tubular portion and the outer tubular portion, which form the insertion space for receiving the pipe, are formed integrally with the joint body. The fitting groove is formed in the outer peripheral surface of the inner tubular portion. The sealing member as a whole is examined precisely.

As a result, according to a joint of the invention, the sealing member is visible from the exterior of the outer tubular portion after the sealing member is installed in the inner tubular portion. In this manner, the invention effectively prevents a failure to mount the sealing member and allows damage inspection in the sealing member along the entire circumference. The invention also effectively enables burr inspection in the fitting groove along the entire circumference at the time when the sealing member is not mounted.

### BRIEF DESCRIPTION OF THE DRAWINGS

Fig. 1 is an exploded perspective view showing a joint according to a first embodiment of the present invention;
Fig. 2 is a perspective view showing the joint illustrated in Fig. 1;
Fig. 3 is a cross-sectional view showing the joint illustrated in Fig. 2;
Fig. 4 is a cross-sectional view taken along line 4-4 of Fig. 3;
Fig. 5 is a front view showing a sealing member that is fitted in a fitting groove formed in an inner tubular portion and held in a state visible through view windows formed in the outer tubular potion;
Fig. 6 is an exploded perspective view showing a mold for forming the joint;
Fig. 7 is a front view showing a first slide core for forming an insertion space and a second slide core for forming a passage that are inserted in the split mold members of the mold for the joint;
Fig. 8(a) is a cross-sectional view showing a fixed split mold member and a movable split mold member of the mold for the joint that are clamped together;
Fig. 8(b) is a cross-sectional view showing the first slide core that is inserted into the split mold members in the state illustrated in Fig. 8(a);
Fig. 9(a) is a cross-sectional view showing the second slide core that is inserted into the first slide core and the split mold members in the state illustrated in Fig. 8(b);
Fig. 9(b) is a cross-sectional view showing an insert for forming a fitting groove that is inserted into the first and second slide cores and the split mold members in the state illustrated in Fig. 9(a);
Fig. 10 is a cross-sectional view showing molten plastic injected into the cavity in the mold;
Fig. 11 is a perspective view showing a joint according to a second embodiment of the invention;
Fig. 12 is a front view showing the joint illustrated in Fig. 11;
Fig. 13 is a cross-sectional view showing a joint of a modification of the invention;
Fig. 14 is a cross-sectional view taken along line 14-14 of Fig. 13;
Fig. 15 is a front view showing a portion of a joint of another modification of the invention; and
Fig. 16 is a front view showing a portion of a joint of a further modification of the invention.

### MODES FOR CARRYING OUT THE INVENTION

### (First Embodiment)

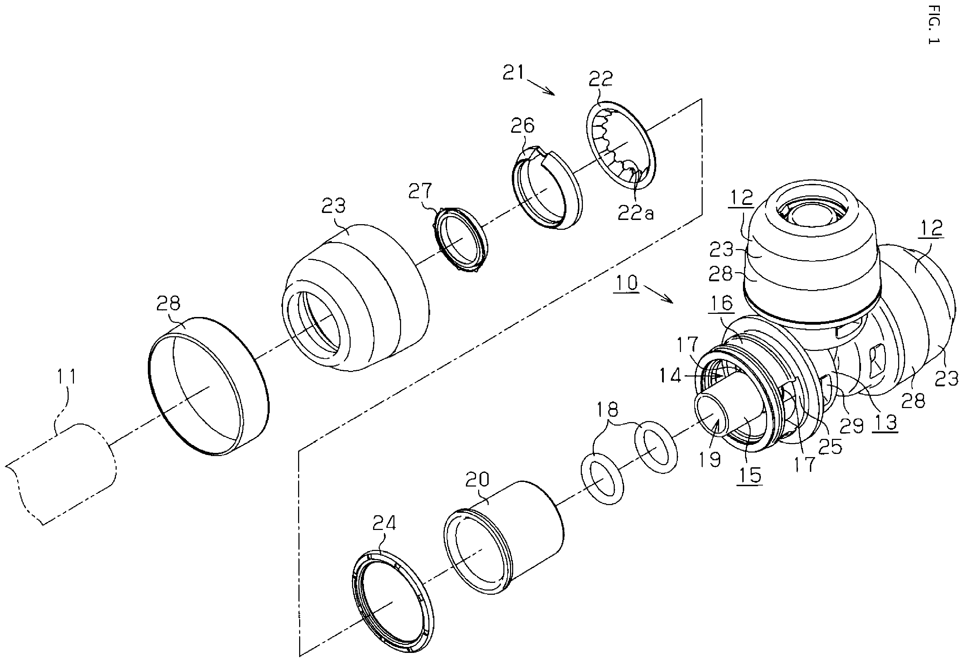

A joint according to a first embodiment of the present invention will now be described in detail with reference to Figs. 1 to 10.

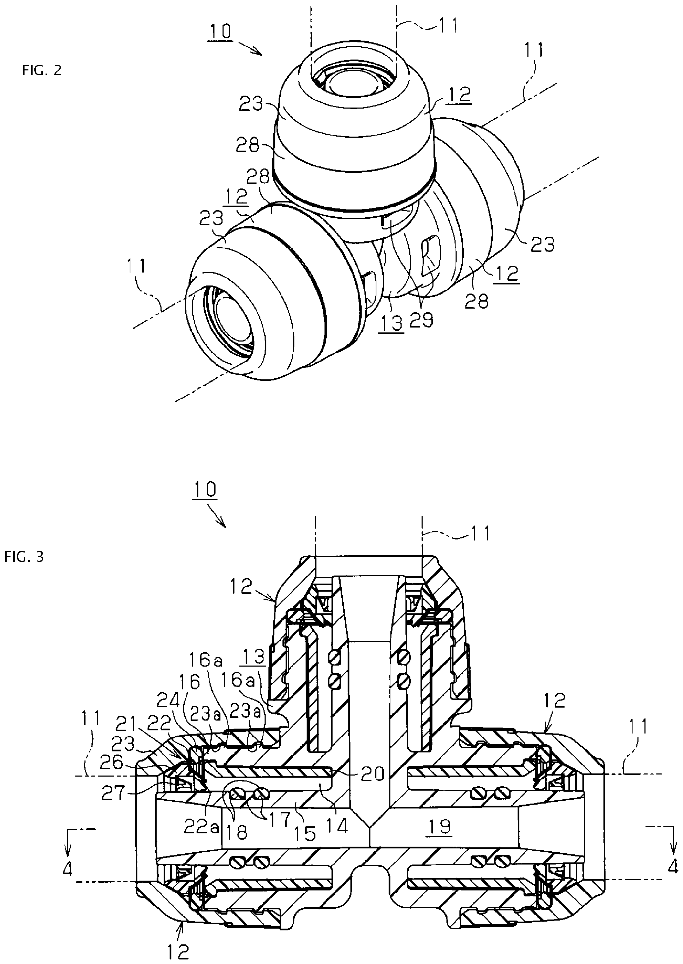

As illustrated in Figs. 1 and 2, a joint 10 includes a joint body 13. The joint body 13 has three pipe joint portions 12 extending in three directions. Each of the pipe joint portions 12 has a cylindrical shape and a plastic pipe 11 is joined to the joint portion 12. The joint body 13 is formed of a rubber incorporating plastic such as polyphenylene sulfide (PPS) plastic incorporating rubber. The plastic pipes 11 are each formed of plastic such as polyolefin (for example, cross-linked polyethylene and polybutene). Since the pipe joint portions 12 are identical, the description herein will be focused on one of the joint portions 12.

With reference to Figs. 1 and 3, an inner tubular portion 15 and an outer tubular portion 16, which form an insertion space 14 for receiving the corresponding plastic pipe 11, are formed integrally with the joint body 13. A pair of fitting grooves 17 are formed in the outer peripheral surface of the inner tubular portion 15 and arranged in parallel. A sealing member 18 formed of ethylene-propylene-diene monomer (EPDM) is fitted in each of the fitting grooves 17. The sealing members 18 maintain water-tightness in the gap between the inner peripheral surface of the plastic pipe 11 and the outer peripheral surface of the inner tubular portion 15 when the plastic pipe 11 is inserted into the insertion space 14. The two fitting grooves 17 are located closer to the inner end of the outer tubular portion 16 than the outer end, thus decreasing the length of the joint body 13. The interior of the inner tubular portion 15 is a passage 19 in which fluid such as water flows.

A cylindrical spacer 20 is inserted into the insertion space 14 such that, when the insertion space 14 receives the plastic pipe 11, the spacer 20 is arranged around the plastic pipe 11. The spacer 20 is formed of transparent plastic such as polyamide plastic and thus has a visible interior. The spacer 20 prevents foreign matter from entering the insertion space 14.

A retainer mechanism 21 for preventing the plastic pipe 11 from separating from the insertion space 14 is formed at a position close to the outer end compared to the spacer 20. A retainer ring 22, which is a component of the retainer mechanism 21, is formed of metal such as stainless steel. A plurality of retainer pieces 22a project diagonally from an inner peripheral portion of the retainer ring 22. The retainer pieces 22a bite into an outer peripheral portion of the plastic pipe 11 received in the insertion space 14 such that the retainer ring 22 retains the plastic pipe 11. The retainer ring 22 is held between a cap 23 formed of PPS, which is arranged around the outer tubular portion 16, and a holder ring 24 formed of polyoxymethylene (POM) plastic. Recessed portions 23a are formed in the inner peripheral surface of the cap 23 and engaged with corresponding projections 16a formed in the outer tubular portion 16. This secures the cap 23 to the outer tubular portion 16. Since the cap 23 is formed of transparent plastic, the sealing member 18 is visible through the cap 23, view windows 25, which will be described later, and the spacer 20.

A split ring 26 formed of PPS is arranged between the retainer ring 22 and the cap 23 and maintains the retainer pieces 22a each at a certain inclination angle. The retainer ring 22, the holder ring 24, the cap 23, and the split ring 26 configure the retainer mechanism 21 for the plastic pipe 11.

An insertion guide 27 formed of polypropylene (PP) plastic, which is pressed against the distal surface of the plastic pipe 11 and guides the plastic pipe 11 when the plastic pipe 11 is inserted, is arranged in the insertion space 14. The insertion guide 27 has a changeable diameter, which is selectively increased and decreased. A cap cover 28 formed of stainless steel is mounted on the outer peripheral surface of the cap 23. The cap cover 28 maintains and prevents the cap 23 from separating from the outer tubular portion 16.

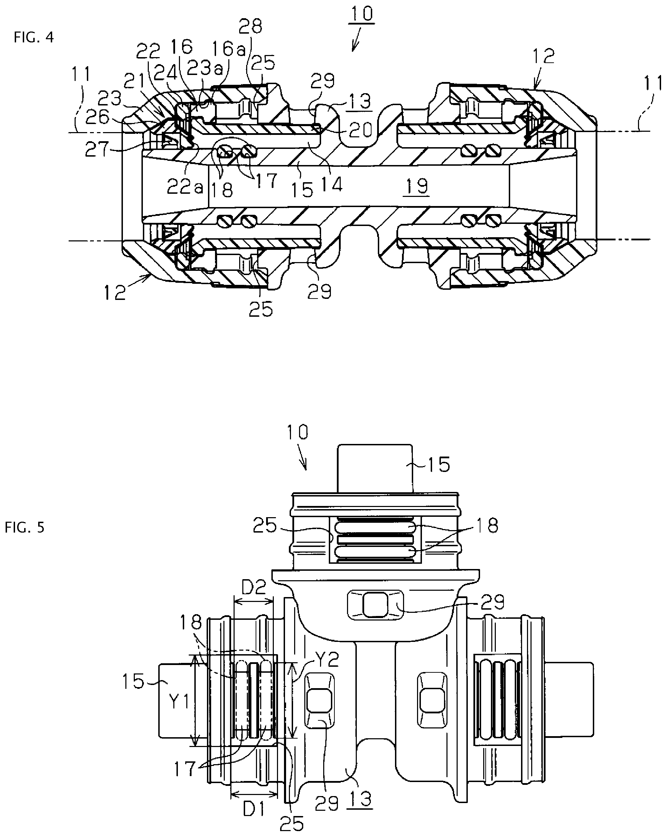

As illustrated in Figs. 4 and 5, a pair of view windows 25 are formed in the outer tubular portion 16 and arranged at opposite positions spaced apart at 180 degrees. The fitting grooves 17 of the inner tubular portion 15 or the sealing members 18 mounted in the fitting grooves 17 are viewed from the exterior of the outer tubular portion 16 through the view windows 25. Each of the view windows 25 is a rectangular through hole as viewed from the front. Using the view windows 25, it can be determined whether the sealing members 18 have been mounted in the fitting grooves 17 of the inner tubular portion 15. Also, the view windows 25 allow confirmation that the sealing members 18 have been mounted at designated positions. Further, it may be examined whether there is damage, dust, or dirt on the surfaces of the sealing members 18 through the view windows 25.

In other words, with reference to Fig. 5, the length Y1 of the portion of each of the view windows 25 facing the fitting grooves 17 in the radial direction of the outer tubular portion 16 (the length as viewed from the front) is greater than or equal to the length Y2 of each fitting groove 17 in the radial direction of the inner tubular portion 15. Also, the width D1 of the portion of each view window 25 facing the fitting grooves 17 in the axial direction of the outer tubular portion 16 is greater than or equal to the width D2 of each of the two fitting grooves 17 in the axial direction of the inner tubular portion 15. Since the radial length Y1 and the axial width D1 of each view window 25 are set in the above-described manners, the view windows 25 ensure visibility of the two fitting grooves 17 in the entire circumferential direction and the entire width direction and the sealing members 18, which are mounted in the corresponding fitting grooves 17, in the entire circumferential direction and the entire width direction.

A checking hole 29 extends through an inner end portion of the outertubular portion 16 such that it may be determined whether the plastic pipe 11 has been inserted into the insertion space 14 through the checking hole 29.

A mold for molding the joint 10, which has the above-described configuration, will hereafter be described.

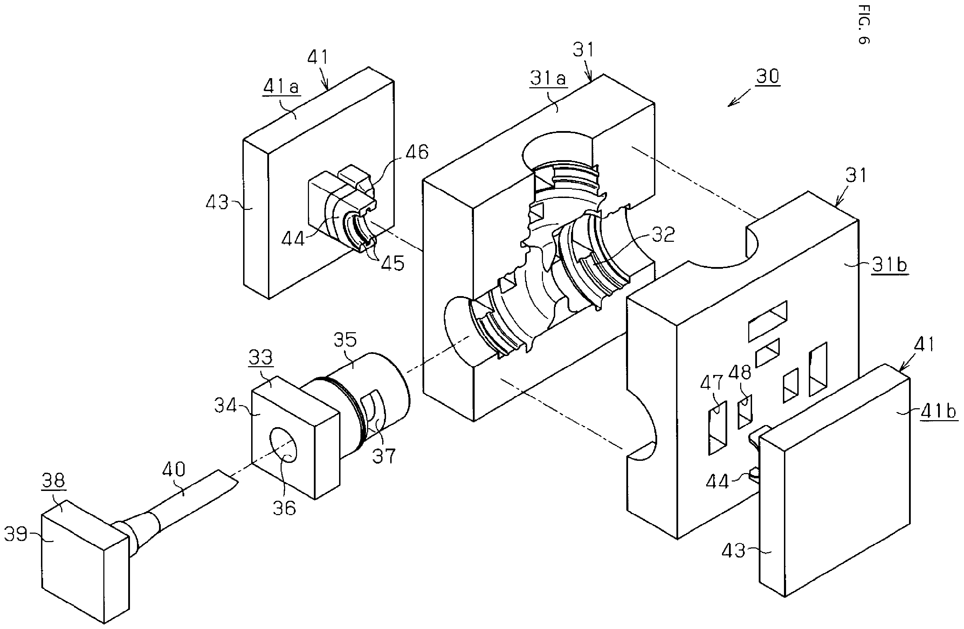

As illustrated in Fig. 6, a mold 30 includes a pair of split mold members 31. The split mold members 31 include a fixed split mold member 31a and a movable split mold member 31b, which face each other. The split mold members 31a, 31b each have a recess 32 for forming the outer peripheral surfaces of the outer tubular portions 16, which extend in three directions. The two split mold members 31a, 31b are clamped together and molten plastic is injected into the recesses 32. In this manner, the outer peripheral surfaces of the outer tubular portions 16 of the joint body 13 are formed.

A first slide core 33 for forming the insertion space includes a parallelepiped-shaped base 34, which is located at the proximal side of the first slide core 33, and a cylindrical body 35 joined to the base 34. A circular hole 36, which extends in the axial direction of the cylindrical body 35, extends through a central portion of the base 34. The circular hole 36 communicates with the space in the cylindrical body 35. A pair of elongated holes 37 extends through the cylindrical body 35 and is arranged at opposite positions spaced apart by 180 degrees.

A second slide core 38 for forming a passage has a base 39, which is formed at the proximal side of the second slide core 38, and a columnar body 40, which is joined to the base 39 and extends from a central portion of the base 39 in the direction perpendicular to the base 39. The columnar body 40 of the second slide core 38 is arranged to pass through the circular hole 36 of the base 34 of the first slide core 33 and projects into the cylindrical body 35.

Inserts 41 for forming the fitting grooves 17 include a pair of insert members 41a, 41b. The insert members 41a, 41b are arranged with respect to the corresponding split mold members 31a, 32b to face each other. Each of the insert members 41a, 41b has a base 43 shaped like a rectangular board and a projecting portion 44 for forming the fitting grooves 17 and the view windows 25. The projecting portion 44 projects from the corresponding side of the base 43. A pair of arcuate projections 45 for forming the two fitting grooves are formed in a distal portion of the projecting portion 44 and spaced apart at a certain interval. A projected portion 46 for forming the checking hole 29 is projected parallel to the projecting portion 44 adjacently to the projecting portion 44.

The projecting portion 44 and the projected portion 46 of each one of the insert members 41a, 41b are inserted into an insertion hole 47 and an insertion hole 48, respectively, which are formed in the corresponding one of the fixed and movable split mold members 31a, 31b, and thus received in the recess 32. In this state, the projecting portions 44 of the insert members 41a, 41b, each of which has an arcuate shape, face and contact each other to form a cylindrical shape. This causes the projecting portions 44 to form the annular fitting grooves 17 in the outer peripheral surface of the inner tubular portion 15. Specifically, the view windows 25 are formed by the projecting portions 44, and the fitting grooves 17 are formed by the projections 45, which project inward from the distal ends of the associated projecting portions 44. As a result, the radial length Y1 of each view window 25 is greater than the radial length Y2 of each fitting groove 17 and the axial width D1 of the view window 25 is greater than the axial width D2 of the fitting groove 17.

When the fitting grooves 17 are formed by causing contact between the two projecting portions 44, a slight gap may be formed between the contact surfaces. In this case, molten plastic enters the gap and produces a burr, thus decreasing the water-tightness in the gap between the inner tubular portion 15 and the corresponding sealing member 18. To prevent this problem, burr inspection is performed on the fitting grooves 17 each as a whole through the view windows 25. If a burr is found, a tool is inserted through either one of the view windows 25 to remove the burr.

A method for manufacturing the joint 10 using the mold 30, which is configured as described above, will hereafter be described.

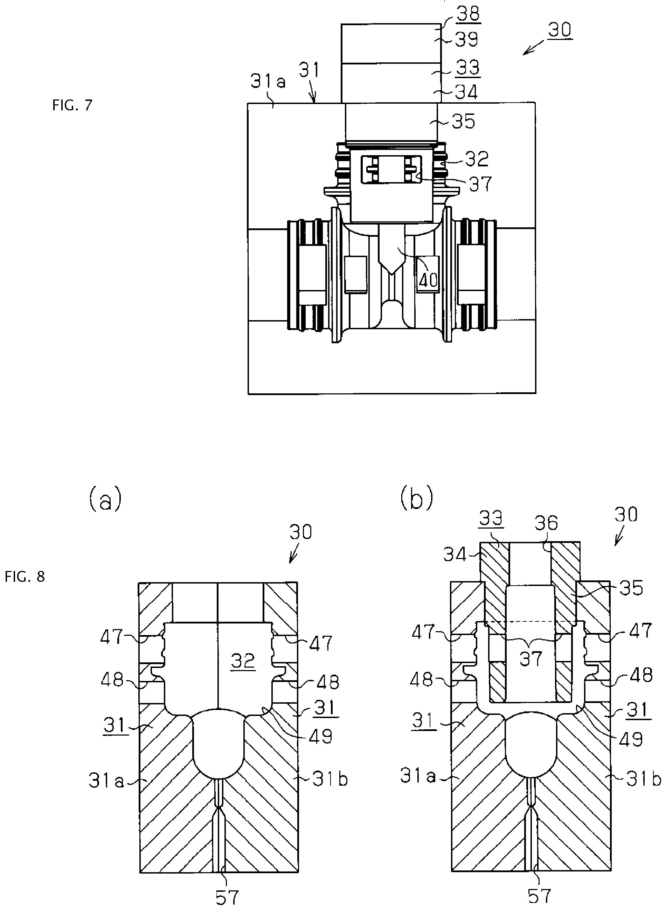

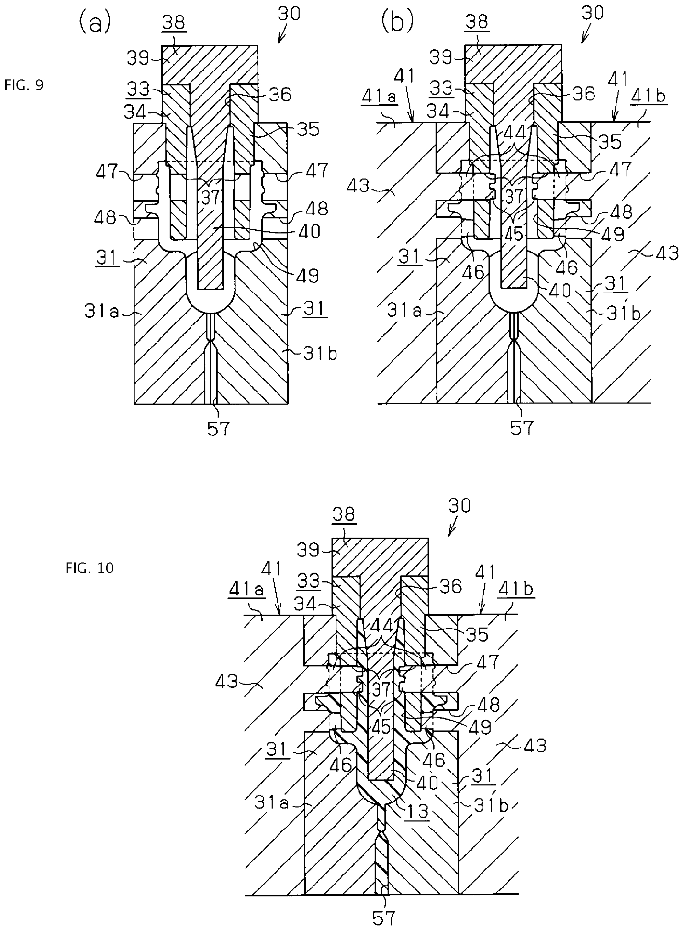

As illustrated in Fig. 8(a), the movable split mold member 31b is moved and clamped to the fixed split mold member 31a to form a cavity 49 for forming the joint body 13 in the split mold members 31a, 31b. This allows formation of the outer peripheral surfaces of the outer tubular portions 16. Subsequently, as illustrated in Fig. 8(b), the first slide core 33 is slid and clamped such that the insertion space 14 between the outer tubular portion 16 and the inner tubular portion 15 is to be formed. Then, with reference to Fig. 9(a), the second slide core 38 is inserted into the circular hole 36 of the first slide core 33 and clamped. In this manner, the passage 19 in the inner tubular portion 15 may be formed. In this state, as illustrated in Fig. 7, the first slide core 33 must reach such a position that the elongated holes 37 are to form the fitting grooves 17 in the inner tubular portion 15.

Afterwards, as illustrated in Fig. 9(b), the projecting portions 44 and the projected portions 46 of the inserts 41 for forming the fitting grooves 17 are inserted into the insertion holes 47 and the insertion holes 48, respectively, of the corresponding split mold members 31a, 31b and clamped. As a result, with reference to Fig. 10, the split mold members 31a, 31b, the first slide core 33, the second slide core 38, and the insert members 41a, 41b are clamped together to form the cavity 49. Then, by injecting molten PPS into the cavity 49 through a gate 57, the joint body 13 is molded.

After the joint body 13 is molded and cooled, the insert members 41a, 41b are removed. Then, the second slide core 38 is separated followed by the first slide core 33. Eventually, by separating the split mold members 31a, 31b from each other, the joint body 13 is obtained.

Operation of the joint 10, which has the above-described configuration, will now be described.

The inner tubular portions 15 and the outer tubular portions 16, which form the insertion spaces 14 for the plastic pipes 11, are formed integrally with the joint body 13 through injection molding. This eliminates a joint portion between each inner tubular portion 15 and the associated outer tubular portion 16, thus correspondingly decreasing the length of the joint 10 as a whole. Further, decrease in strength caused by the joint portion is avoided such that the joint 10 has enhanced strength.

Each outer tubular portion 16 of the joint body 13 has the view windows 25. Before the sealing members 18 are mounted in the fitting grooves 17 in the associated inner tubular portion 15, the fitting grooves 17 are viewed through the view windows 25 of the outer tubular portion 16. As has been described, the radial length Y1 of each view window 25 is greater than the radial length Y2 of each fitting groove 17 and the axial width D1 of the view window 25 is greater than the axial width D2 of the fitting groove 17. This allows each fitting groove 17 as a whole to be visually checked from the exterior through the two view windows 25 to carry out burr inspection on the fitting groove 17. If a burr is found, the burr is removed using a tool inserted through either one of the view windows 25.

Subsequently, the sealing members 18 are fitted in the fitting grooves 17 and viewed through the view windows 25 of each outer tubular portion 16. Since each view window 25 is greater than each fitting groove 17 in the radial and axial directions as has been described, each of the sealing members 18 mounted in the fitting grooves 17 is viewed as a whole through the view windows 25 easily and quickly. It is thus determined whether each sealing member 18 is installed at the designated position and whether there is damage, dust, or dirt on the surface of the sealing member 18.

Afterwards, the plastic pipes 11 are inserted into the insertion spaces 14 of the joint 10. The inner end of each plastic pipe 11 is guided by the corresponding insertion guide 27 and received such that the retainer mechanism 21 retains and maintains the plastic pipe 11. In this manner, as illustrated in Figs. 2 and 3, the three plastic pipes 11 are joined to the pipe joint portions 12 of the joint 10, which extend in the three directions.

The first embodiment has the advantages described below.
(1) In the joint 10 of the first embodiment, the inner tubular portions 15 and the outer tubular portions 16, which form the insertion spaces 14 for the plastic pipes 11, are formed integrally with the joint body 13. The two fitting grooves 17 are formed in the outer peripheral surface of each inner tubular portion 15 and the two sealing members 18 are mounted in the corresponding fitting grooves 17. The two view windows 25 are formed in each outer tubular portion 16 and arranged at opposite positions. As a result, when the sealing members 18 are not fitted in the fitting grooves 17 of each inner tubular portion 15, each fitting groove 17 is visible along the entire circumference and the entire width. When the sealing members 18 are fitted, the sealing members 18 are visible through the view windows 25 of each outertubular portion 16. It is thus determined whether the sealing members 18 have reliably been mounted.
   Thus, according to the joint 10 of the first embodiment, the sealing members 18 are viewed from the exterior after having been mounted in each inner tubular portion 15. This prevents a failure to mount any one of the sealing members 18. It also allows examination of each sealing member 18 along the entire circumference to detect damage on the surface of the sealing member 18. Further, when the sealing members 18 are not mounted, burr inspection may be performed on the fitting grooves each along the entire circumference, thus effectively preventing water leak from the joint 10. Further, the two view windows 25 are located at the opposite positions in each outer tubular portion 16. This simplifies the configuration of each of the inserts 41 for forming the fitting grooves 17 in the inner tubular portion 15, thus facilitating molding.
(2) The length Y1 of the portion of each view window 25 facing the fitting grooves 17 in the radial direction of the outer tubular portion 16 is greater than or equal to the length Y2 of each fitting groove 17 in the radial direction of the inner tubular portion 15. The width D1 of the portion of the view window 25 facing the fitting grooves 17 in the axial direction of the outer tubular portion 16 is greater than or equal to the width D2 of the fitting groove 17 in the axial direction of the inner tubular portion 15. As a result, the fitting grooves 17 are easily viewed each in the entire circumferential direction and the entire width direction through the corresponding two view windows 25. Also, the view windows 25 allow easy viewing of the sealing members 18 each as a whole when the sealing members 18 are mounted in the fitting grooves 17.
(3) Each view window 25 is a rectangular through hole as viewed from the front. This desirably maintains mechanical strength of the associated outer tubular portion 16, compared to a cutout.
(4) The fitting grooves 17 are located closer to the inner end than the outer end of the associated outer tubular portion 16. This decreases the dimension of the joint 10 as a whole and thus reduces pressure loss in the joint 10, even if the joint 10 employs the inner periphery sealing method and thus has a passage 19 with a small diameter.
(5) To manufacture the joint 10, the mold 30 including the two split mold members 31a, 31b for forming the outer peripheral surfaces of the joint body 13, the inserts 41 for forming the fitting grooves 17 in the inner tubular portion 15, and the slide cores 33, 38 for forming the insertion space 14 and the passage 19 are clamped together and molten plastic is injected into the cavity 49. This allows easy and one-time molding of the joint 10, in which the inner tubular portions 15 and the corresponding outer tubular portions 16 are formed integrally.
(6) The inserts 41 are formed by the two insert members 41a, 41b. The projecting portions 44 project from the facing surfaces of the insert members 41a, 41b. The distal portion of each projecting portion 44 has a semi-cylindrical shape. The projections 45 project from the inner peripheral surface of the projecting portion 44 to form the fitting grooves 17 in the outer peripheral surface of the inner tubular portion 15. As a result, by means of the simply configured mold, the fitting grooves 17 are formed in each inner tubular portion 15 and the view windows 25 are provided in each outer tubular portion 16 to face the corresponding fitting grooves 17. This ensures visibility of each of the fitting grooves 17 along the entire circumference and the entire width.

### (Second Embodiment)

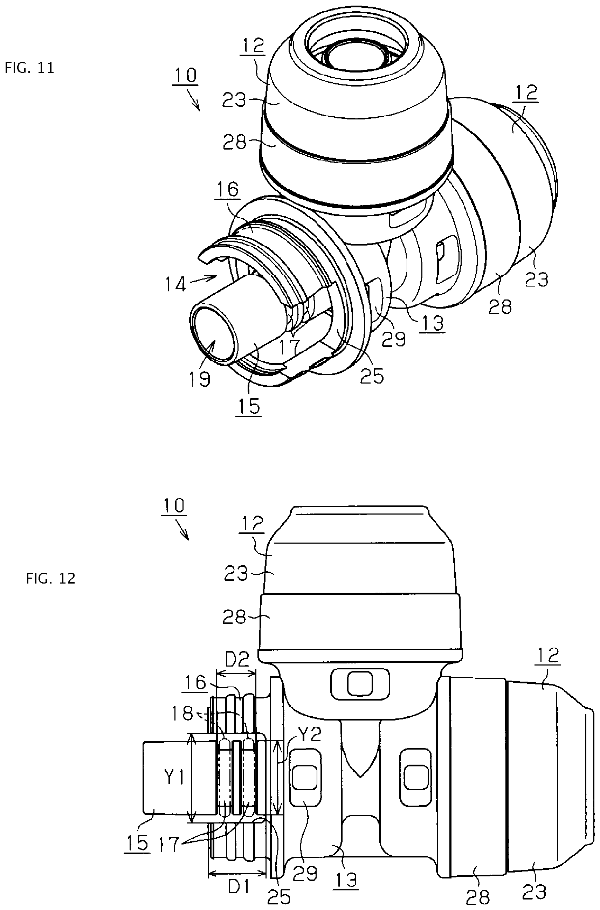

A joint according to a second embodiment of the invention will now be described with reference to Figs. 11 and 12. The description below is focused on the difference between the second embodiment and the first embodiment.

As illustrated in Figs. 11 and 12, each view window 25 is configured by a cutout having a rectangular shape extending axially from the outer end of the outer tubular portion 16, as viewed from the front. The axial width D1 of the cutout is greater than the width D2 covering the range corresponding to the two fitting grooves 17. The radial length Y1 of the cutout is greater than the radial length Y2 of each fitting groove 17. As a result, the view windows 25 ensure visibility of the fitting grooves 17 each as a whole and the sealing members 18 each as a whole when the sealing members 18 are fitted in the fitting grooves 17.

To manufacture the joint 10 of the second embodiment, the insertion hole 47 formed in each split mold member 31a, 31b used in the method of manufacturing the joint 10 of the first embodiment extends to reach the axial end of the split mold member 31a, 31b. Also, the axial dimension of the elongated hole 37 of the first slide core 33 is increased. By clamping the mold 30 and injecting molten plastic into the cavity formed in the mold 30, the joint 10 having the view windows 25 formed by the cutouts is formed.

In the second embodiment, each view window 25 is formed by a cutout having an opening end. Accordingly, in addition to the advantages of the first embodiment, the second embodiment has the advantage that the fitting grooves 17 and the sealing members 18 can be seen each in the axial direction and the radial direction through the cutouts from the side corresponding to the outer end of the outer tubular portion 16. This further improves visibility of the fitting grooves 17 and the sealing members 18. Further, the second embodiment further facilitates burr removal from the fitting grooves 17, correction of the position of each sealing member 18, removal of dust or dirt from the surface of the sealing member 18, and greasing the surface of the sealing member 18.

The above illustrated embodiments may be modified to the forms described below.

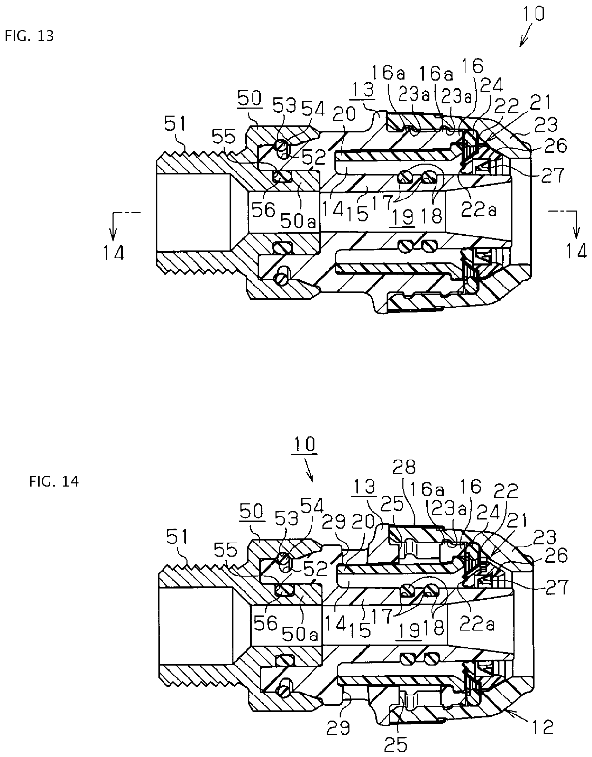

As illustrated in Fig. 13, the joint 10 may be configured by the joint body 13 of each of the illustrated embodiments, which is arranged at a first end, and a joint adapter 50, which is located at a second end. The joint adapter 50 may include an external thread 51, which is connected to a non-illustrated part of a water faucet. Specifically, the joint adapter 50, which has a tubular shape, is connected to the second end of the joint 10 through a joint ring 54. The joint ring 54 is engaged with an annular groove 52, which is formed in the outer peripheral surface of the joint body 13, and a recess 53 formed in the joint adapter 50. An annular groove 55 is formed in the inner peripheral surface of an inner tube 50a of the joint adapter 50. An O-ring 56 is fitted in the annular groove 55 to maintain water-tightness in the gap between the joint body 13 and the joint adapter 50. With reference to Fig. 14, as in the illustrated embodiments, each outer tubular portion 16 of the joint body 13 has the view windows 25 for viewing the sealing members 18, which are fitted in the fitting grooves 17 of the corresponding inner tubular portion 15.

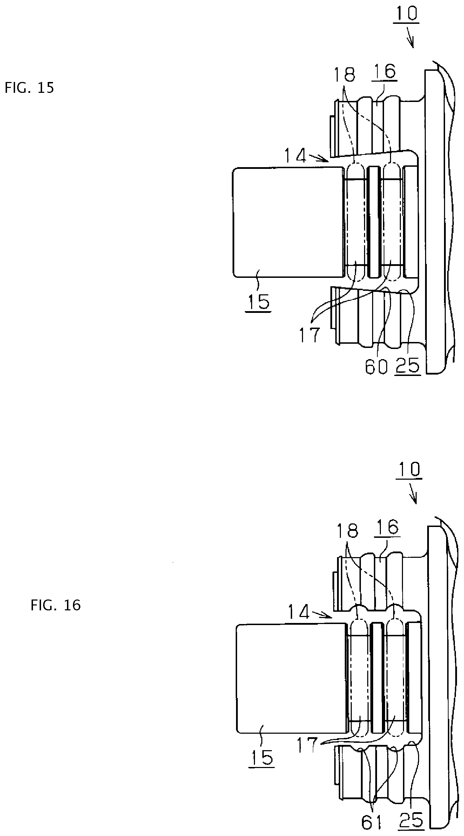

As illustrated in Fig. 15, the opposite surfaces extending in the axial direction of the cutouts forming the view windows 25 of the second embodiment may be tapered surfaces 60 such that the interval between the tapered surfaces 60 decreases toward the outer end of the outer tubular portion 16. In this case, each view window 25 has a width increasing toward the inner end of the outer tubular portion 16. This improves visibility of the one of the fitting grooves 17 that is located closer to the inner end and the sealing member 18 mounted in the fitting groove 17.

With reference to Fig. 16, the opposite surfaces extending in the axial direction of the cutouts forming the view windows 25 of the second embodiment may have a pair of recesses 61, which has an arcuate cross section, in correspondence with the fitting grooves 17. This improves visibility of the upper ends and the lower ends of the fitting grooves 17 and the sealing members 18 as viewed from the front.

The number of the pipe joint portions 12 of the joint 10 may be changed as necessary. Pipe joint portions 12 may extend in, for example, two directions or four directions.

The spacer 20 may be omitted. In this case, the thickness of the cylindrical body 35 of the first slide core 33 must be decreased. It is thus necessary to design the cylindrical body 35 to have a sufficiently great enough mechanical strength.

The inner tubular portion 15 may have a single fitting groove 17 and a single sealing member 18. Alternatively, three or more fitting grooves 17 and three or more sealing members 18 may be arranged. Further, each fitting groove 17 may be enlarged in width to receive a correspondingly enlarged sealing member 18, which also has an increased width. Also in these cases, the radial length Y1 of each view window 25 is greater than or equal to the radial length Y2 of each fitting groove 17 and the axial width D1 of the view window 25 is greater than or equal to the axial width D2 of the fitting groove 17 (or the axial width including the range corresponding to the fitting groove 17).

Each view window 25 of the first embodiment may be formed in other shapes including an oval shape and a polygonal shape as viewed from the front.

The components formed of plastic, such as the joint body 13, may be formed of engineering plastic including polyoxymethylene (POM), polyphthalamide (PPA), and polyphenylsulfone (PPSU).

A soft metal pipe such as a copper pipe may be used as the pipe, instead of the plastic pipe 11.

The retainer mechanism 21 or the cap 23 may be omitted from the joint 10.

The joint 10 may be used to join a floor heating pipe or a road heating pipe, other than pipes for the water-feed system or the hot water supply system.

## Claims

1. A method for manufacturing a joint using a mold,
wherein the joint includes:
a joint body (13); and
an inner tubular portion (15) and an outer tubular portion (16) formed integrally with the joint body (13), the inner tubular portion (15) and the outer tubular portion (16) forming an insertion space (14) for receiving a pipe,
the inner tubular portion (15) has an outer peripheral surface,
a fitting groove (17) is formed in the outer peripheral surface of the inner tubular portion (15),
a sealing member (18) is fitted in the fitting groove (17) to maintain water-tightness in the gap between the pipe received in the insertion space (14) and the inner tubular portion (15), and
a pair of view windows (25) are formed in the outer tubular portion (16) and arranged at opposite positions to visually check the fitting groove (17) and fitting of the sealing member (18) in the fitting groove (17) from the exterior, the view windows (25) being formed such that, when the sealing member (18) is not fitted, the entire circumference and the entire width of the fitting groove (17) can be seen,
wherein the mold includes:
a pair of split mold members (31a, 31b) for forming an outer peripheral surface of the joint body (13);
an insert (41) passed through the split mold members (31a, 31b) to form the fitting groove (17) in the inner tubular portion (15); and
a slide core (33, 38) for forming the insertion space (14) and a passage (19) inside the inner tubular portion (15), wherein
the insert (41) is configured by a pair of insert members (41a, 41b),
projecting portions (44) for forming the view windows (25) are formed on opposing surfaces of the insert members (41a, 41b)
each of the projecting portions (44) has a semi-cylindrical distal end,
a protrusion (45) for forming the fitting groove (17) is formed in an inner peripheral surface of the distal end of each projecting portion (44) to form the fitting groove (17) in the outer peripheral surface of the inner tubular portion (15),
the method being **characterized by**:
clamping the mold; and
injecting molten plastic into a cavity (49) formed in the mold to perform molding..

2. The method of manufacturing a joint according to claim 1, **characterized in that** the length of a portion of each view window (25) facing the fitting groove (17) in a radial direction of the outer tubular portion (16) is greater than or equal to the length of the fitting groove (17) in a radial direction of the inner tubular portion (15), and the width of the portion of each view window (25) facing the fitting groove (17) in the axial direction of the outer tubular portion (16) is greater than or equal to the width of the fitting groove (17) in the axial direction of the inner tubular portion (15).

3. The method for manufacturing a joint according to claim 1 or 2, **characterized in that** each view window (25) is a rectangular through hole as viewed from the front.

4. The method for manufacturing a joint according to claim 1 or 2, **characterized in that** the outer tubular portion (16) has an outer end, each view window (25) being a cutout extending axially inward from the outer end of the outer tubular portion (16).

5. The method for manufacturing a joint according to any one of claims 1 to 4, **characterized in that** the outer tubular portion (16) has an outer end, the fitting groove (17) being arranged inward with respect to the outer end of the outer tubular portion (16).

## Patentansprüche

1. Verfahren zum Herstellen einer Verbindung mithilfe einer Form, wobei die Verbindung aufweist:
einen Verbindungskörper (13); und
einen inneren rohrförmigen Abschnitt (15) und einen äußeren rohrförmigen Abschnitt (16), die einstückig mit dem Verbindungskörper (13) ausgebildet sind, wobei der innere rohrförmige Abschnitt (15) und der äußere rohrförmige Abschnitt (16) einen Einsteckraum (14) zur Aufnahme eines Rohrs bilden,
der innere rohrförmige Abschnitt (15) eine äußere Umfangsoberfläche aufweist, eine Passnut (17) in der äußeren Umfangsfläche des inneren rohrförmigen Abschnitts (15) ausgebildet ist, ein Dichtungselement (18) in die Passnut (17) eingepasst ist, um die Wasserdichtigkeit in dem Spalt zwischen dem Rohr, das in dem Einsteckraum (14) aufgenommen ist, und dem inneren rohrförmigen Abschnitt (15) zu erhalten, und
ein Paar von Sichtfenstern (25), das in dem äußeren rohrförmigen Abschnitt (16) ausgebildet ist und an gegenüberliegenden Positionen angeordnet ist, um die Passnut (17) und den Sitz des Dichtungselements (18) in der Passnut (17) von außen sichtzuprüfen, wobei die Sichtfenster (25) ausgebildet sind, sodass, wenn das Dichtungselement (18) nicht eingesetzt ist, der gesamte Umfang und die gesamte Breite der Passnut (17) zu sehen sind, wobei die Form aufweist:
ein Paar von geteilten Formelementen (31a, 31b) zum Bilden einer äußeren Umfangsfläche des Verbindungskörpers (13);
einen Einsatz (41), der durch die geteilten Formteile (31a, 31b) durchgeführt wird, um die Passnut (17) in dem inneren rohrförmigen Abschnitt (15) zu bilden; und
einen Gleitkern (33, 38) zum Bilden des Einsteckraums (14) und eines Durchgangs (19) innerhalb des inneren rohrförmigen Abschnitts (15), wobei
der Einsatz (41) durch ein Paar von Einsatzelementen (41a, 41b) konfiguriert wird,
vorstehende Abschnitte (44) zum Bilden der Sichtfenster (25) an gegenüberliegenden Oberflächen der Einsatzelemente (41a, 41b) ausgebildet sind,
jeder der vorstehenden Abschnitte (44) ein halbzylindrisches distales Ende aufweist,
ein Vorsprung (45) zum Bilden der Passnut (17) in einer inneren Umfangsfläche des distalen Endes jedes vorspringenden Abschnitts (44) ausgebildet ist, um die Passnut (17) in der äußeren Umfangsfläche des inneren rohrförmigen Abschnitts (15) zu bilden,
wobei das Verfahren **gekennzeichnet ist durch**: Klemmen der Form; und
Einspritzen von geschmolzenem Kunststoff in einen Hohlraum (49), der in der Form ausgebildet ist, um das Formen durchzuführen.

2. Verfahren zum Herstellen einer Verbindung nach Anspruch 1, **dadurch gekennzeichnet, dass** die Länge eines Abschnitts jedes Sichtfensters (25), die der Passnut (17) in einer radialen Richtung des äußeren rohrförmigen Abschnitts (16) zugewandt ist, größer als oder gleich der Länge der Passnut (17) in einer radialen Richtung des inneren rohrförmigen Abschnitts (15) ist, und dadurch, dass die Breite des Abschnitts jedes Sichtfensters (25), das der Passnut (17) in axialer Richtung des äußeren rohrförmigen Abschnitts (16) zugewandt ist, größer als oder gleich der Breite der Passnut (17) in axialer Richtung des inneren rohrförmigen Abschnitts (15) ist.

3. Verfahren zur Herstellung einer Verbindung nach Anspruch 1 oder 2, **dadurch gekennzeichnet, dass** jedes Sichtfenster (25) von vorne gesehen ein rechteckiges Durchgangsloch ist.

4. Verfahren zur Herstellung einer Verbindung nach Anspruch 1 oder 2, **dadurch gekennzeichnet, dass** der äußere ringförmige Abschnitt (16) ein äußeres Ende aufweist, wobei jedes Sichtfenster (25) ein Ausschnitt ist, der sich axial von einem äußeren Ende des äußeren ringförmigen Abschnitts (16) nach innen erstreckt.

5. Verfahren zur Herstellung einer Verbindung nach einem der Ansprüche 1 bis 4, **dadurch gekennzeichnet, dass** der äußere rohrförmige Abschnitt (16) ein äußeres Ende aufweist, wobei die Passnut (17) einwärts in Bezug auf das äußere Ende des äußeren rohrförmigen Abschnitts (16) angeordnet ist.

## Revendications

1. Procédé de fabrication d'un raccord à l'aide d'un moule,
le raccord comprenant :
un corps de raccord (13) ; et
une partie tubulaire intérieure (15) et une partie tubulaire extérieure (16) formées d'un seul tenant avec le corps de raccord (13), la partie tubulaire intérieure (15) et la partie tubulaire extérieure (16) formant un espace d'insertion (14) destiné à recevoir un tuyau,
la partie tubulaire intérieure (15) comportant une surface périphérique extérieure,
une rainure de pose (17) étant formée dans la surface périphérique extérieure de la partie tubulaire intérieure (15),
un élément d'étanchéité (18) étant posé dans la rainure de pose (17) afin de maintenir une étanchéité à l'eau dans l'espace entre le tuyau posé dans l'espace d'insertion (14) et la partie tubulaire intérieure (15) et
une paire de fenêtre d'observation (25) étant formées dans la partie tubulaire extérieure (16) et disposées au niveau d'emplacements opposés à des fins de vérification visuelle de la rainure de pose (17) et de la pose de l'élément d'étanchéité (18) dans la rainure de pose (17) depuis l'extérieur, les fenêtres d'observation (25) étant formées de telle sorte que, lorsque l'élément d'étanchéité (18) n'est pas posé, la circonférence entière et la largeur entière de la rainure de pose (17) puissent être vues,
le moule comprenant :
une paire d'éléments de moule en deux pièces (31a, 31b) destinés à former une surface périphérique extérieure du corps de raccord (13) ;
une garniture (41) introduite à travers les éléments de moule en deux pièces (31a, 31b) afin de former la rainure de pose (17) dans la partie tubulaire intérieure (15) ; et
un noyau coulissant (33, 38) destiné à former l'espace d'insertion (14) et un passage (19) à l'intérieur de la partie tubulaire intérieure (15),
la garniture (41) étant configurée par une paire d'éléments de garniture (41a, 41b),
des parties saillantes (44) destinées à former les fenêtres d'observation (25) étant formées sur des surfaces opposées des éléments de garniture (41a, 41b),
chacune des parties saillantes (44) comportant une extrémité distale semi-cylindrique,
une saillie (45) destinée à former la rainure de pose (17) étant formée dans une surface périphérique intérieure de l'extrémité distale de chaque partie saillante (44) afin de former la rainure de pose (17) dans la surface périphérique extérieure de la partie tubulaire intérieure (15), le procédé étant **caractérisé par**
le serrage du moule ; et
l'injection de plastique fondu dans une cavité (49) formée dans le moule afin de réaliser un moulage.

2. Procédé de fabrication d'un raccord selon la revendication 1, **caractérisé en ce que** la longueur d'une partie de chaque fenêtre d'observation (25) faisant face à la rainure de pose (17) dans une direction radiale de la partie tubulaire extérieure (16) est supérieure ou égale à la longueur de la rainure de pose (17) dans une direction radiale de la partie tubulaire intérieure (15), et la largeur de la partie de chaque fenêtre d'observation (25) faisant face à la rainure de pose (17) dans une direction axiale de la partie tubulaire extérieure (16) est supérieure ou égale à la largeur de la rainure de pose (17) dans la direction axiale de la partie tubulaire intérieure (15).

3. Procédé de fabrication d'un raccord selon la revendication 1 ou 2, **caractérisé en ce que** chaque fenêtre d'observation (25), vue de face, est un trou traversant rectangulaire.

4. Procédé de fabrication d'un raccord selon la revendication 1 ou 2, **caractérisé en ce que** la partie tubulaire extérieure (16) comporte une extrémité extérieure, chaque fenêtre d'observation (25) étant un évidement s'étendant axialement vers l'intérieur à partir de l'extrémité extérieure de la partie tubulaire extérieure (16).

5. Procédé de fabrication d'un raccord selon l'une quelconque des revendications 1 à 4, **caractérisé en ce que** la partie tubulaire extérieure (16) comporte une extrémité extérieure, la rainure de pose (17) étant disposée vers l'intérieur par rapport à l'extrémité extérieure de la partie tubulaire extérieure (16).
